# NEUE EUROPÄISCHE PATENTSCHRIFT

(11) **EP 1 061 531 B2**
(45) Veröffentlichungstag und Bekanntmachung des Hinweises auf die Entscheidung über den Einspruch: **04.11.2009**
(45) Hinweis auf die Patenterteilung: 01.09.2004
(21) Anmeldenummer: 00110483.5
(22) Anmeldetag: 17.05.2000
(51) Int. Cl.: H01C 17/28, G01K 7/16

(54) **Verfahren zur Herstellung von Sensoren, sowie Sensor, insbesondere Temperatursensor**
Method for making sensors, sensor, especially temperature sensor
Procédé de fabrication de capteurs, capteur, en particulier capteur de température

(30) Priorität: 14.06.1999 DE 19927108
(43) Veröffentlichungstag der Anmeldung: 20.12.2000
(73) Patentinhaber: Heraeus Electro-Nite International N.V., 3530 Houthalen (BE)
(72) Erfinder: Wienand, Karlheinz, Dr., 63741 Aschaffenburg (DE); Damaschke, Gerhard, 65439 Flörsheim (DE)
(74) Vertreter: Kühn, Hans-Christian

(56) Entgegenhaltungen:
- DD-A1- 267 789
- DE-A- 3 822 533
- DE-B- 1 153 807
- DE-U- 8 913 803
- US- - 4 321 825
- US-A- 3 110 088

## Beschreibung

Die Erfindung betrifft ein Verfahren zur Herstellung von Sensoren, insbesondere Temperatursensoren, wobei jeweils wenigstens zwei im Raster eines durchlaufenden Trägerstreifens beabstandete Anschlußstege mit Kontaktfeldern zur elektrischen und mechanisch festen Verbindung mit jeweils einem Sensorelement vorgesehen sind und wobei zunächst durchgängige Ränder des Trägerstreifens später von den Anschlußstegen abgetrennt werden, sowie einen Temperatursensor.

Aus dem deutschen Gebrauchsmuster G 89 13 803.1 ist ein Widerstandsthermometer zur Messung der Oberflächentemperatur bekannt, das einen Metallschichttemperatursensor in einem Gehäuse aufweist; der Metallschichttemperatursensor ist in einem Plastikgehäuse elektronischer Leistungsbauelemente mit Kühlfläche angeordnet, wobei der zur Kühlung des elektronischen Bauelements ausgebildete und mit einer Bohrung versehene Anschluß den Träger des Metallschichttemperatursensors bildet. Die Anschlußflächen des Metallschichttemperatursensors sind durch Bonddrähte mit den für das elektronische Leistungsbauelement vorgesehenen Anschlüssen verbunden, wobei das Gehäuse durch eine Metallfläche des als Träger benutzten Anschlusses und die den Metallschichttemperatursensor und die Kontaktstellen der Bonddrähte mit den nach außen geführten Anschlüssen umgebende Plastikumhüllung begrenzt ist.

Die Plastikumhüllung besteht aus Epoxidharz und wird in einem Spritzgußwerkzeug einer Spritzgußmaschine hergestellt; eine Spritzgußmaschine ist beispielsweise aus der DE-OS 23 58 911 bekannt.

Gemäß DE G 89 13 803.1 handelt es sich um ein Widerstandsthermometer, dessen Anschlußstege mittels eines durchlaufenden Trägerstreifens - wie er üblicherweise für Mikrochipleiterrahmen verwendet wird und beispielsweise aus der EP 0 209 265 B1 bekannt ist - gefertigt werden kann; aufgrund der elektrischen Verbindung mittels Bonddrähten handelt es sich dabei um eine verhältnismäßig aufwendige Fertigung. Weiterhin ist es nicht ohne weiteres möglich, das Widerstandsthermometer in beliebigen Gehäusekonstruktionen einzusetzen, wie es aufgrund der zunehmenden Bedeutung von Temperatursensoren - beispielsweise in der Kfz-Technik - üblich ist.

Aus der DE 41 08 789 A1 ist ein Temperatursensor bekannt, der in den Luftstrom eines Turboladers eines Kraftfahrzeuges einsetzbar ist. Er verwendet eine elektronische Komponente, deren elektrischer Widerstand von der Temperatur abhängig ist. Die temperaturabhängige Komponente befindet sich in einer flachen Einbuchtung einer Stirnfläche des Sensorgehäuses. Die temperaturabhängige Komponente besitzt keine Abdeckung, so dass sie vollständig dem Massenstrom ausgesetzt ist, der gemessen werden soll. Die Anschlussdrähte der temperaturabhängigen Komponente verlaufen mit Abstand entlang der Außenseite des Fühlergehäuses bis zu ihrer jeweiligen Kontaktfahne, die Drähte sind nur in unmittelbarer Nähe der temperatursensitiven Komponente elektrisch isoliert, im übrigen verlaufen sie jedoch plank, bis zu ihrer Kontaktfahne. Das temperatursensitive Bauteil weist vorzugsweise einen negativen Temperaturkoeffizienten auf. Die Verbindungsdrähte sind aus einem Werkstoff mit geringer Wärmeleitfähigkeit.

Weiterhin ist aus der DE 38 22 533 die Herstellung eines Temperatursensors unter Verwendung von weitgehend automatisierten Fertigungsphasen bekannt. Dabei wird in einer ersten Phase auf zwei über eine Brücke verbundene Lamellenstecker ein Verbindungselement aus Kunststoff gepresst, welches zwei Abschnitte der Stecker mechanisch verbindet; in einer zweiten Phase wird die Brücke durchtrennt und so die Lamellenstecker elektrisch voneinander isoliert, wobei die Enden von zwei Anschlüssen eines Temperaturfühlers an Abschnitte der Stecker angelötet werden. In einer dritten Phase wird ein Trägergehäuse für die Stecker und den Temperaturfühler aufgepresst. In einer dritten Phase wird das Gehäuse mit einem ersten Abschnitt zum Schutz des Temperaturfühlers und mit einem zweiten becherförmigen Abschnitt in dem die Enden der Stecker für die Koppelung mit einer geeigneten Steckverbindung liegen, versehen. In der dritten Phase wird ein Teilabschnitt der Stecker und der Temperaturfühler mit dem ersten Teilabschnitt des Gehäuses ummantelt.

Weiterhin ist aus der DE 42 37 038 ein Temperatursensor bestehend aus einem oder mehreren in einem Kunststoffgehäuse angeordneten Steckkontaktpaaren mit jeweils einer an einem Ende des oder der Steckkontaktpaare angelöteten Heiß- oder Kaltleitertablette bekannt, wobei das Kunststoffgehäuse aus einem mittleren Halterungsteil und einem Gehäusesteckerflansch besteht. Die Heiß- oder Kaltleitertablette ist jeweils zwischen gegenüberliegenden Enden des oder der Steckkontaktpaare angeordnet, wobei das oder die Steckkontaktpaare im Bereich der Heiß- oder Kaltleitertablette von einem dünnwandigen Kunststoffmantel dicht umschlossen sind, der Teil des einteilig in einem einzigen Arbeitsgang um das oder die Steckkontaktpaare gespritzten Kunststoffgehäuses ist. Das Kunststoffgehäuse besteht aus mit Kohle oder Glasfasern verstärktem Polyamid.

Die Erfindung stellt sich die Aufgabe, ein Herstellverfahren für einen Temperatursensor mit einem Meßwiderstand als Sensorelement anzugeben; dabei soll neben einer preisgünstigen Massenfertigung nach dem Prinzip eines Mehrfach-Rohlings auch die Möglichkeit bestehen, den Sensor örtlich vorgegebenen Gehäuseformen anzupassen und trotzdem eine hohe Stabilität zu erzielen.

Die Aufgabe wird verfahrensgemäß dadurch gelöst, daß jeweils wenigstens zwei zur Verbindung mit einem Sensorelement vorgesehene Anschlußstege im zusammenhängenden Trägerstreifen wenigstens teilweise mit Kunststoff so umspritzt werden, daß auf den Anschlußstegen jeweils wenigstens zwei im Abstand zueinander angeordnete Kunststoffkörper entstehen, wobei zwischen Kunststoffkörpem benachbarter Anschlußstege im gleichen Spritzvorgang wenigstens zum Teil Distanzelemente aus Kunststoff gebildet werden, während Kontaktfelder und Enden der Anschlußstege von Kunststoff frei bleiben.

In einer vorteilhaften Ausgestaltung des Verfahrens werden jeweils zwei benachbarte Kunststoffkörper über Distanzelemente verbunden, wobei die jeweilige Grenze Kunststoffkörper/Distanzelement als eine Sollbruchstelle ausgebildet ist; vorteilhafterweise werden die äußeren Ränder des Trägerstreifens im Anschluß an den Spritzvorgang im Spritzgußwerkzeug durch Stanzen von den Anschlußstegen getrennt, wobei es sich praktisch um einen an den Spritzvorgang anschließenden Arbeitsvorgang handelt.

Die Sensorelemente werden dann mit ihren jeweiligen Anschlußbereichen auf die Kontaktflächen der Anschlußstege aufgesetzt und zur elektrischen und mechanischen Verbindung aufgelötet, wobei eine nachfolgende elektrische Funktionsprüfung im zusammenhängenden Rohling bzw. Mehrfach-Rohling durchgeführt werden kann. Zur Vereinzelung von Sensoren aus dem Mehrfach-Rohling werden die Distanzelemente im Bereich ihrer jeweiligen Sollbruchstellen gebrochen. Pro Sensorelement sind wenigstens zwei Kunststoffkörper vorgesehen, wobei jeweilige Zwischenräume entlang der Anschlußstege zwischen den Kunststoffkörpem bzw. zwischen Sensorelement und benachbartem Kunststoffkörper durch Biegen entlang der Anschlußstege in eine Paßform für ihre spätere Anwendung als Sensor gebracht werden. Vorteilhafterweise werden benachbarte Bereiche der Kunststoffkörper auf jeweils einem Anschlußsteg zuvor so geformt, daß sie beim Biegen als Anschlag dienen.

Vorteilhafte Ausgestaltungen des Verfahrens sind in den Ansprüchen 2 bis 7 angegeben.

Als vorteilhaft erweist es sich, daß nach dem Verfahren eine flächenhafte Sensoranordnung herstellbar ist, die dann beim technischen Einsatz an die räumlichen Gegebenheiten der Umgebung bzw. der Gehäuse angepaßt werden kann. Dabei erweist es sich als besonders vorteilhaft, daß mehrere Kunststoffspritzgußteile auf die Trägeranordnung aufgebracht werden können, die dann Biegezonen für die räumliche Anpassung zur Unterbringung des Sensors in besonderen Gehäusen bzw. örtlichen Umgebungen gewährleisten.

Die Aufgabe wird für einen Sensor, bei dem ein Sensorelement über eigene Anschlußkontakte mit Kontaktfeldern einer Trägeranordnung elektrisch und mechanisch fest verbunden ist, und die Trägeranordnung wenigstens zwei im Abstand zueinander angeordnete langgestreckte Anschlußstege aufweist, die durch wenigstens ein sie teilweise einhüllendes Spritzgußteil als Kunststoffkörper mechanisch fest verbunden sind, wobei an einem Ende der Trägeranordnung die Anschlußstege Kontaktfelder zur elektrischen und mechanischen Verbindung mit dem Sensorelement aufweisen, während das andere gegenüberliegende Ende der Trägeranordnung zur Verbindung mit einer Meßeinrichtung vorgesehen ist, dadurch gelöst, daß wenigstens zwei im Abstand zueinander angeordnete Kunststoffkörper vorgesehen sind, und daß die zwischen Sensorelement und Kunststoffkörper oder zwischen den Kunststoffkörpern befindlichen Zwischenraume entlang der Anschlußstege als Biegezonen zur Anpassung an vorgegebene Lochraumstrukturen ausgebildet sind.

Vorteilhafte Ausgestaltungen des Sensors sind im Anspruch 9 angegeben.

In einer vorteilhaften Ausgestaltung sind wenigstens zwei im Abstand zueinander angeordnete Kunststoffkörper vorgesehen, wobei entlang der jeweiligen Achse der Anschlußstege gesehen zwischen Sensorelement und Kunststoffkörper bzw. zwischen den Kunststoffkörpern befindlichen Zwischenräume auf den Anschlußstegen als Biegezonen zur Anpassung an vorgegebene Gehäusestrukturen ausgebildet sind.

Vorzugsweise sind benachbarte Bereiche von Kunststoffkörpern jeweils paarweise als Anschlag für einen Biegevorgang entlang der Achse der Anschlußstege ausgebildet.

Insbesondere erweist es sich als vorteilhaft, daß auf Bonddrähte bzw. besondere Zuleitungen verzichtet werden kann, wobei der Sensor auch in komplex geformte Gehäuse einführbar ist; dabei ist vorteilhafterweise auch eine automatisierbare Verarbeitung möglich.

Im folgenden ist der Gegenstand der Erfindung anhand der Figuren 1, 2a, 2b, 3a, 3b und 4 näher erläutert.
Figur 1 zeigt schematisch das Umspritzen von Anschlußstegen im Trägerstreifen bzw. Endlosband;
Figur 2a zeigt schematisch das Abstanzen der Ränder der Trägeranordnung im Spritzgußwerkzeug;
Figur 2b stellt eine Seitenansicht des Mehrfach-Rohlings nach dem Stanzen dar, wobei die Anschlußstege im Profil erkennbar sind;
Figur 3a zeigt das Bestücken von Anschlußstegen mit Sensorelementen;
Figur 3b zeigt das Vereinzeln von Sensoren;
Figur 4 zeigt eine kundenspezifische Verformung der Sensoren entlang der Anschlußstege zur Anpassung an vorgegebene Gehäuseformen.

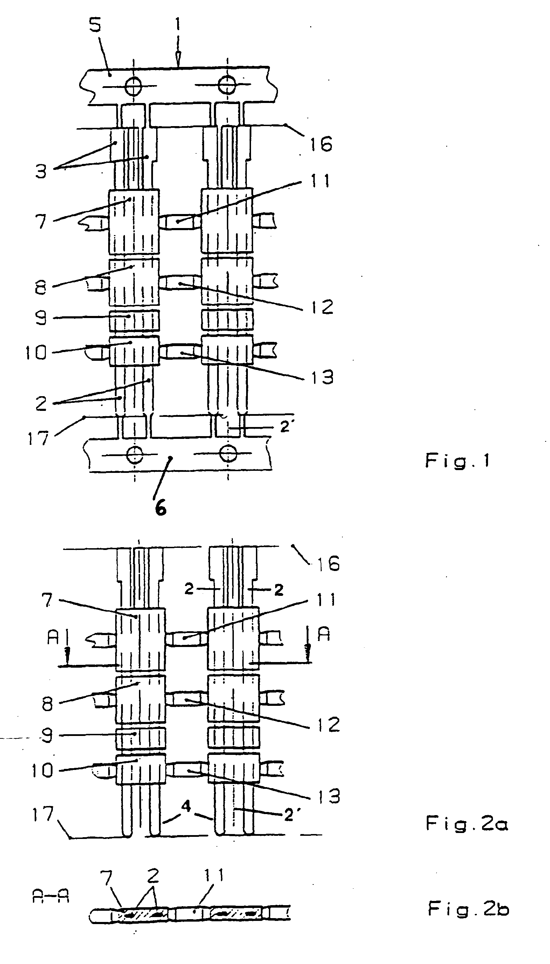

Gemäß Figur 1 sind zwischen den durchgängigen Rändern bzw. Randstreifen 5, 6 eines Trägerstreifens 1 Anschlußstege 2 mit Längsachsen 2 senkrecht zur Transportrichtung angeordnet, die jeweils an einem Ende mit Kontaktfeldern 3 zur elektrischen und mechanischen Verbindung mit aufzubringenden Sensorelementen versehen sind, während sie an ihrem anderen Ende übliche Anschlußkontakte 4 für die Verbindung zu einer Auswerteeinrichtung enthalten. Die sich gegenüberliegenden Bereiche der Anschlußstege 2 sind jeweils mit einem Randstreifen 5, 6 des Trägerstreifens 1 versehen. Die Abstände der Anschlußstege 2 bzw. der Kontaktfelder 3 sind so gewählt, daß sie gleichzeitig als Raster für dieBestückungsposition für jeweils ein aufzubringendes Sensorelement geeignet sind.

Anhand Figur 1 ist schematisch dargestellt, daß mittels eines hier nicht sichtbaren Spritzgußwerkzeuges jeweils zwei zu einem Sensorelement gehörende Anschlußstege 2 teilweise mit Kunststoffkörpern 7, 8, 9 und 10 so umspritzt sind, daß jeweils zwischen den Kunststoffkörpern bzw. zwischen den Kontaktfeldern 3 und den jeweils benachbarten Kunststoffkörpern 7 entlang der Achse 2' der Anschlußstege 2 gesehen Zwischenräume entstehen; die Kunststoffkörper sind in ihrer Form so gewählt, daß die Anschlußstege beim praktischen Einsatz durch Biegen bzw. Knicken entlang der Achsen 2' der Anschlußstege 2 der jeweiligen Gehäuseform für den späteren Einsatzfall angepaßt werden können. Zwischen den Kunststoffkörpern 7, 8, 9 und 10 zweier im Rastermaß aufeinanderfolgende Trägeranordnungen sind zusätzliche Kunststoffkörper 11, 12, 13 als Distanzelemente aufgespritzt, die Sollbruchstellen im Grenzbereich zwischen Kunststoffkörper und Distanzelement enthalten, so daß die Trägeranordnungen in einem späteren Verfahrensschritt zu Sensoren vereinzelt werden können.

Weiterhin sind in Figur 1 die für den Stanzvorgang zum Abtrennen der Randstreifen 5, 6 vorgesehenen Stanzlinien 16, 17 schematisch dargestellt.

Der Trägerstreifen 1 besteht aus einem in der Leiterrahmen-Technik bzw. "Lead Frame"-Technik bekannten Werkstoff, vorzugsweise aus verzinntem Kupfer bzw. Kupferlegierung; in einer bevorzugten Ausführungsform ist zwischen der Verzinnung und dem Kupfer enthaltenden Träger eine Nickelsperrschicht mit einer Dicke im Bereich von 1 bis 3 µm vorgesehen. Der Trägerstreifen weist eine übliche Ätz- bzw. Stanzteildicke im Bereich von 0,15 bis 0,25 mm - vorzugsweise von 0,2 mm - auf.

Figur 2a zeigt die entlang der Stanzlinien 16, 17 von den nicht mehr sichbaren Randstreifen getrennten Anschlußstege; das Abstanzen der Randstreifen erfolgt im Spritzgußwerkzeug, so daß hierzu kein besonderer Arbeitsgang ist.

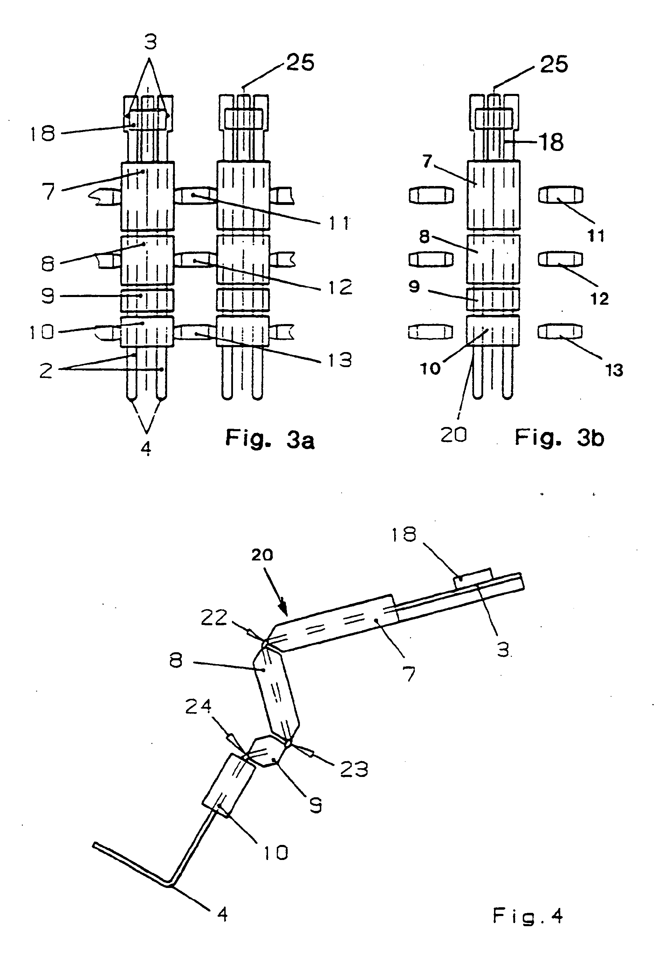

Figur 2b zeigt eine Seitenansicht des Mehrfach-Rohlings nach dem Abstanzvorgang, wobei im Profil des Rohlings auch die Anschlußstege 2, die Kunststoffkörper 7 sowie die Distanzelemente 11 aus Kunststoff erkennbar sind. Der weitere Zusammenhang des Mehrfach-Rohlings durch die Distanzelemente ermöglicht eine einfache Montage und Funktionsprüfung nach der elektrischen und mechanischen Verbindung der Sensorelemente 18 mit den jeweiligen Kontaktfeldern gemäß Figur 3a; diese Figur zeigt schematisch das Bestücken im Mehrfach-Rohling - d. h. im zusammenhängenden Kunststoff-Metall-Verbund - der Trägeranordnungen mit den Sensorelementen, wobei die Sensorelemente 18 mit ihren Anschlußkontakten auf die Kontaktfelder 3 der Anschlußstege 2 aufgelötet werden. Anschließend werden die Trägeranordnungen 20 durch Zerbrechen der als Distanzelemente 11, 12, 13 vorgesehenen Kunststoffkörper mit ihren Sollbruchstellen gemäß Figur 3b als Sensoren vereinzelt und nach Figur 4 für kundenspezifische Anwendungen in eine dreidimensionale Form durch Biegen der Trägeranordnungen 20 entlang der Achse der Anschlußstege gebracht; dabei ist es wichtig, daß die Biege- bzw. Knickstellen 22, 23, 24 in freigelassenen Bereichen zwischen Sensorelement 18, Kunststoffkörper 7, bzw. zwischen Kunststoffkörper 7 und 8, bzw. 8 und 9 liegen.

Zwischen den Kontaktfeldem 3 der Anschlußstege 2 ist jeweils entlang der Achse 2' ein sogenannter Tiefenanschlag 25 aus Kunststoff erkennbar, der ebenfalls während des Spritzvorganges erzeugt wird und aufgrund seiner Stabilität zum Schutz der Anschlußstege 2 bzw. des Sensorelements 18 beim späteren Einbringen in Gehäuse oder Taschen dient. Somit wird insbesondere bei automatischer Montage keine Kraft auf die Anschlußstege 2 oder auf das Sensorelement 18 ausgeübt.

Am äußersten Ende der Anschlußstege 2 sind die Anschlüsse 4 für die elektrische Verbindung zu einer Auswerteeinrichtung zu erkennen. Es ist somit möglich, die Trägeranordnung so zu knicken, bzw. zu verbiegen, daß sie den jeweiligen Gehäuseformen vor Ort angepaßt werden kann. Dabei kann der Sensor ein eigenes, der Umgebung angepaßtes Gehäuse erhalten oder in einem fremden Gehäuse untergebracht werden.

## Patentansprüche

1. Verfahren zur Herstellung von Sensoren, insbesondere Temperatursensoren, wobei jeweils wenigstens zwei im Raster eines durchlaufenden Trägerstreifens (1) beabstandete Anschlußstege (2) mit Kontaktfeldern (3) zur elektrischen und mechanischen Verbindung mit jeweils einem Sensorelement (18) vorgesehen sind und wobei zunächst durchgängige Ränder (5, 6) des Trägerstreifens (1) später von den Anschlußstegen (2) abgetrennt werden,
**dadurch gekennzeichnet, daß** jeweils wenigstens zwei zur Verbindung mit einem Sensorelement (18) vorgesehene Anschlußstege (2) im zusammenhängenden Trägerstreifen (1) wenigstens teilweise mit Kunststoff so umspritzt werden, daß auf den Anschlußstegen (2) jeweils wenigstens zwei im Abstand zueinander angeordnete Kunststoffkörper (7, 8, 9, 10) entstehen, wobei zwischen Kunststoffkörpern benachbarter Anschlußstege (2) im gleichen Spritzvorgang wenigstens zum Teil Distanzelemente (11, 12, 13) aus Kunststoff gebildet werden, während Kontaktfelder und Enden der Anschlußstege von Kunststoff frei bleiben.

2. Verfahren nach Anspruch 1, **dadurch gekennzeichnet, daß** jeweils zwei benachbarte Kunststoffkörper über Distanzelemente (11, 12, 13) verbunden werden, wobei die jeweilige Grenze zwischen den Kunststoffkörpem (7, 8, 10) und den Distanzelementen (11, 12, 13) durch eine Sollbruchstelle gebildet wird.

3. Verfahren nach Anspruch 1 oder 2, **dadurch gekennzeichnet, daß** die Ränder (5, 6) des Trägerstreifens (1) im Anschluß an den Spritzvorgang im Spritzgußwerkzeug von den Anschlußstegen (2) durch Stanzen abgetrennt werden.

4. Verfahren nach Anspruch 2 oder 3, **dadurch gekennzeichnet, daß** Sensorelemente (18) mit ihren jeweiligen Anschlußbereichen auf die Kontaktfelder (3) der Anschlußstege (2) aufgesetzt und anschließend aufgelötet werden.

5. Verfahren nach Anspruch 4, **dadurch gekennzeichnet, daß** zur Vereinzelung von Sensoren die Distanzelemente (11, 12, 13) im Bereich ihrer Sollbruchstellen abgebrochen werden.

6. Verfahren nach Anspruch 5, **dadurch gekennzeichnet, daß** pro Sensor wenigstens zwei Kunststoffkörper (7, 8, 9, 10) vorgesehen sind, wobei jeweilige Zwischenräume zwischen den Kunststoffkörpem (7, 8, 9, 10) eines Anschlußsteges (2) bzw. zwischen Sensorelement (18) und Kunststoffkörpern (7) durch Biegen entlang der Anschlußstege (2) in eine Paßform für die Anwendung als Sensor gebracht werden.

7. Verfahren nach Anspruch 6, **dadurch gekennzeichnet, daß** benachbarte Teile der Kunststoffkörper (7, 8, 9, 10) auf jeweils einem Anschlußsteg (2) so geformt werden, daß sie beim Biegen als Anschlag dienen.

8. Sensor, insbesondere Temperatursensor, bei dem ein Sensorelement (18) über eigene Anschlußkontakte mit Kontaktfeldern (3), einer Trägeranordnung (20) elektrisch und mechanisch fest verbunden ist, wobei die Trägeranordnung (20) wenigstens zwei im Abstand zueinander angeordnete langgestreckte Anschlußstege (2) aufweist, die durch wenigstens ein sie teilweise einhüllende Spritzgußteil als Kunststoffkörper (7, 8, 9, 10) mechanisch fest verbunden sind, wobei an einem Ende der Trägeranordnung die Anschlußstege Kontaktfelder (3) zur Bestückung mit dem Sensorelement (18) aufweisen, während das andere Ende der Trägeranordnung zur Verbindung mit einer Meßeinrichtung vorgesehen ist, **dadurch gekennzeichnet, daß** wenigstens zwei im Abstand zueinander angeordnete Kunststoffkörper (7, 8, 9, 10) vorgesehen sind, und daß die zwischen Sensorelement (18) und Kunststoffkörper (7) oder zwischen den Kunststoffkörpern (7, 8, 9, 10) befindlichen Zwischenräume entlang der Anschlußstege (2) als Biegezonen zur Anpassung an vorgegebene Gehäusestrukturen ausgebildet sind.

9. Sensor nach Anspruch 8, **dadurch gekennzeichnet, daß** auf jeweils einem Anschlußsteg (2) angeordnete, benachbarte Bereiche von Kunststoffkörpern (7, 8, 9, 10) jeweils paarweise als Anschlag für einen Biegevorgang ausgebildet sind.

## Claims

1. Process for manufacturing sensors, especially temperature sensors, wherein at least two respective connection bridges (2) set at a distance in the grid of a continuous carrier strip (1) with contact pads (3) for electrical and mechanical connection to one respective sensor element (18) are provided and wherein at first continuous edges (5, 6) of the carrier strip (1) are later separated from the connection bridges (2), **characterised in that** at least two connection bridges (2) provided for connection to a sensor element (18) in the continuous carrier strip (1) are at least partially injection moulded around with plastic so that on the connection bridges (2) respectively at least two plastic bodies (7, 8, 9, 10) arise arranged at a distance from each other, and wherein plastic spacer elements (11, 12, 13) are formed between plastic bodies of adjacent connection bridges (2) at least in part in the same injection process, while contact pads and ends of the connection bridges remain free of plastic.

2. Process according to claim 1, **characterised in that** respectively two adjacent plastic bodies are connected by spacer elements (11, 12, 13), the respective boundary between the plastic bodies (7, 8, 10) and the spacer elements (11, 12, 13) being formed by a rupture point.

3. Process according to claim 1 or 2, **characterised in that** the edges (5, 6) of the carrier strip (1) are separated from the connection bridges (2) by punching following the injection operation in the injection moulding tool.

4. Process according to claim 2 or 3, **characterised in that** sensor elements (18) with their respective connection areas are placed on the contact pads (3) of the connection bridges (2) and subsequently soldered on.

5. Process according to claim 4, **characterised in that** the spacer elements (11, 12, 13) are broken off in the region of their rupture points for the separation of sensors.

6. Process according to claim 5, **characterised in that** at least two plastic bodies (7, 8, 9, 10) are provided per sensor, wherein respective interstices between the plastic bodies (7, 8, 9, 10) of a connection bridge (2) or between the sensor element (18) and plastic bodies (7) are brought into a suitable form for sensor application by bending along the connection bridges (2).

7. Process according to claim 6, **characterised in that** adjacent parts of the plastic bodies (7, 8, 9, 10) on a respective connection bridge (2) are shaped such that upon bending they serve as a stop.

8. Sensor, especially a temperature sensor, wherein a sensor element (18) is firmly connected electrically and mechanically via its own connection contacts to contact pads (3)of a carrier arrangement (20), wherein the carrier arrangement (20) has at least two elongated connection bridges (2) arranged at a distance from each other, which are firmly connected mechanically by at least one injection moulded part as a plastic element (7, 8, 9, 10) partially encasing them, and wherein at one end of the carrier arrangement the connection bridges have contact pads (3) for fitting with the sensor element (18), while the other end of the carrier arrangement is provided for connection to a measuring facility, **characterised in that** at least two plastic bodies (7, 8, 9, 10) are provided arranged at a distance from each other, and **in that** interstices situated between the sensor element (18) and plastic bodies (7) or between the plastic bodies (7, 8, 9, 10) are formed along the connection bridges (2) as bending zones for adaptation to predetermined housing structures.

9. Sensor according to claim 8, **characterised in that** adjacent areas of plastic bodies (7, 8, 9, 10) arranged on a respective connection bridge (2) are constructed in pairs as a stop for a bending operation..

## Revendications

1. Procédé pour fabriquer des capteurs, en particulier des capteurs de température, dans lequel sont prévues respectivement au moins deux barrettes de jonction (2) disposées à distance dans la trame d'une bande portante continue (1) et comprenant des champs de contacts (3) pour la liaison électrique et mécanique avec un élément de capteur (18) respectif, et dans lequel des bordures tout d'abord continues (5, 6) de la bande portante (1) sont sectionnées ultérieurement depuis les barrettes de jonction (2), **caractérisé en ce qu'**au moins deux barrettes de jonction (2) prévues respectivement pour la liaison avec un élément de capteur (18) sont enrobées au moins partiellement de matière plastique par injection dans la bande portante continue (1) de sorte qu'il se forme respectivement sur les barrettes de jonction (2) au moins deux corps en matière plastique (7, 8, 9, 10) agencés à distance l'un de l'autre, tout en formant au moins en partie des éléments d'écartement (11, 12, 13) en matière plastique entre les corps en matière plastique de barrettes de jonction adjacentes (2) pendant la même procédure d'injection, tandis que des champs de contacts et des extrémités des barrettes de jonction restent exempts de matière plastique.

2. Procédé selon la revendication 1, **caractérisé en ce que** deux corps en matière plastique adjacents sont reliés respectivement via des éléments d'écartement (11, 12, 13), et dans lequel la limite respective entre les corps en matière plastique (7, 8, 10) et les éléments d'écartement (11, 12, 13) est formée par un emplacement de rupture de consigne.

3. Procédé selon l'une ou l'autre des revendications 1 et 2, **caractérisé en ce que** les bordures (5, 6) de la bande portante (1) sont sectionnées depuis les barrettes de jonction (2) par estampage, à l'issue de la procédure d'injection dans l'outil de moulage par injection.

4. Procédé selon l'une ou l'autre des revendications 2 et 3, **caractérisé en ce que** des éléments de capteur (18) sont placés sur les champs de contacts (3) des barrettes de jonction (2) avec leurs zones de jonction respectives et sont ensuite soudés.

5. Procédé selon la revendication 4, **caractérisé en ce que** les éléments d'écartement (11, 12, 13) sont rompus dans la zone de leurs emplacements de rupture de consigne pour séparer individuellement les capteurs.

6. Procédé selon la revendication 5, **caractérisé en ce qu'**il est prévu par capteur au moins deux corps en matière plastique (7, 8, 9, 10), et dans lequel des interstices respectifs entre les corps en matière plastique (7, 8, 9, 10) d'une barrette de jonction (2) ou entre l'élément de capteur (18) et les corps en matière plastique (7) sont amenés dans une forme ajustée pour l'application comme capteur, par cintrage le long des barrettes de jonction (2).

7. Procédé selon la revendication 6, **caractérisé en ce que** des parties adjacentes des corps en matière plastique (7, 8, 9, 10) sont conformées respectivement sur une barrette de jonction (2) de manière à servir de butée lors du cintrage.

8. Capteur, en particulier capteur de température, dans lequel un élément de capteur (18) est relié fermement, électriquement et mécaniquement, à des champs de contacts (3) d'un agencement de supports (20) au moyen de propres contacts de raccordement, l'agencement de supports (20) présentant au moins deux barrettes de jonction (2) s'étendant en longueur, agencées à distance l'une de l'autre et qui sont reliées fermement mécaniquement via au moins une pièce par moulage par injection qui les enveloppe partiellement comme corps en matière plastique (7, 8, 9, 10), les barrettes de jonction (2) présentant sur une extrémité de l'agencement de supports (20) des champs de contact (3) pour le garnissage avec l'élément de capteur (18), tandis que l'autre extrémité de l'agencement de supports (20) est prévue pour la liaison avec un dispositif de mesure, **caractérisé en ce qu'**il est prévu au moins deux corps en matière plastique (7, 8, 9, 10) agencés à distance l'un de l'autre, et **en ce que** les interstices, se trouvant entre l'élément de capteur (18) et le corps en matière plastique (7) ou entre les corps en matière plastique (7, 8, 9, 10), sont réalisés le long des barrettes de jonction (2) comme zones de flexion, pour l'adaptation à des structures de boîtier prescrites.

9. Capteur selon la revendication 8, **caractérisé en ce que** des zones adjacentes des corps en matière plastique (7, 8, 9, 10), lesquelles sont agencées respectivement sur une barrette de jonction (2), sont réalisées respectivement par paires comme butées pour une procédure de cintrage.
